# EUROPÄISCHE PATENTSCHRIFT

(11) **EP 3 781 369 B1**
(45) Veröffentlichungstag und Bekanntmachung des Hinweises auf die Patenterteilung: **04.10.2023**
(21) Anmeldenummer: 19723305.9
(22) Anmeldetag: 18.04.2019
(51) Int. Cl.: B25J 17/02, B25J 19/00, B25J 19/06

(54) **VORRICHTUNG ZUM STEUERN EINES HANDHABUNGSGERÄTS**
APPARATUS FOR CONTROLLING A HANDLING DEVICE
DISPOSITIF DE COMMANDE D'UN APPAREIL DE MANIPULATION

(30) Priorität: 20.04.2018 AT 1142018
(43) Veröffentlichungstag der Anmeldung: 24.02.2021
(73) Patentinhaber: Blue Danube Robotics GmbH, 1220 Wien (AT)
(72) Erfinder: BALDINGER, Andreas, 1040 Wien (AT); FERNER, Tobias, 1120 Wien (AT); WOHLKINGER, Walter, 1020 Wien (AT); ZILLICH, Michael, 1080 Wien (AT); BYBERG, Daniel, 24040 Chignolo d'Isola (BG) (IT); FRAGER, Patrick, 9524 Villach-St. Magdalen (AT)
(74) Vertreter: Keschmann, Marc
(86) Internationale Anmeldenummer: PCT/AT2019/000012
(87) Internationale Veröffentlichungsnummer: WO 2019/200415

(56) Entgegenhaltungen:
- DE-A1-102007 062 245
- DE-A1-102015 219 332
- DE-U1-202012 012 857
- US-A- 5 002 173
- US-A1- 2014 052 295

## Beschreibung

Die Erfindung betrifft eine Vorrichtung zum Steuern eines Handhabungsgeräts sowie ein Handhabungsgerät mit der erfindungsgemäßen Vorrichtung

In der WO 2016/000005 A1 ist ein taktiler Sicherheits-Sensor zum Schutz von Personen und ortsfesten oder autonom bewegten Hindernissen vor ortsfesten oder autonom bewegten Handhabungsgeräten, insbesondere Industrierobotern, wie z.B. Fertigungs-, Transport-, Inspektions- oder Servicerobotern und ihren Manipulatoren beschrieben. Zur Kollisionserkennung wird der Sicherheits-Sensor oder eine Mehrzahl solcher Sicherheits-Sensoren am Handhabungsgerät und/oder an deren Manipulatoren angebracht. Der in der WO 2016/000005 A1 beschriebene Sicherheits-Sensor umfasst im wesentlichen eine luftdichte Hülle, die eine gas- oder luftgefüllte Kammer umschließt, und einen innenliegenden barometrischen Drucksensor. Die Form der Hülle wird durch eine nachgiebige Stützstruktur gehalten, wobei die Stützstruktur und die Hülle gemeinsam den Körper des Sensors bilden. Die Stützstruktur sorgt hierbei für Formstabilität und eine mechanische Dämpfung der bei einer Kollision einwirkenden Kräfte. Eine Berührung des Sensors führt zu einer Verformung der Hülle und damit zu einer Komprimierung der Kammer samt Stützstruktur, was wiederum zu einem messbaren Druckanstieg im Inneren der Hülle führt. Ein Druckanstieg über einen gewissen Schwellwert führt zum Stopp des zu sichernden Handhabungsgeräts, auf dessen Oberfläche der Sensor befestigt ist.

In der US 2014/052295 A1 ist eine Vorrichtung gemäß dem Oberbegriff des Anspruchs 1 beschrieben.

Bei den bekannten Vorrichtungen besteht noch immer die Gefahr, dass ein Anwender oder eine ortsfeste Struktur einem Gegenstand und insbesondere mit einem von einem Roboter geführten Werkzeug kollidiert, wodurch weiterhin erhebliche Verletzungsgefahr beim Umgang mit derartigen Handhabungsgeräten besteht. Der Erfindung liegt daher die Aufgabe zugrunde, auch diese Gefahr zu minimieren. Zur Lösung dieser Aufgabe umfasst die erfindungsgemäße Vorrichtung ein auf dem Handhabungsgerät anordenbares Trägergehäuse mit einem außen auf dem Trägergehäuse angeordneten taktilen Sensorkörper sowie einen am Trägergehäuse beweglich gelagerten Werkzeugträger, wobei der Sensorkörper bei Belastung des Werkzeugträgers vom Werkzeugträger betätigbar ist, wobei der Sensorkörper von einer gasgefüllten Kammer gebildet, die von einer flexiblen, durch Kollision mit einem Hindernis verformbaren Hülle umgeben ist und weiters einen Drucksensor zur Messung des Gasdrucks im Inneren der Kammer umfasst. Erfindungsgemäß ist die erfindungsgemäße Vorrichtung dadurch gekennzeichnet, dass der Sensorkörper mit einem ersten Bereich das Trägergehäuse umschließt und mit einem zweiten Bereich in einen Spalt zwischen dem Trägergehäuse und dem Werkzeugträger eingreift.

Die erfindungsgemäße Vorrichtung dient daher als Steuervorrichtung zum Schutz durch Absicherung eines von einem Handhabungsgerät (z.B. einem Roboter) geführten Werkzeugs gegen Kollision mit einem Hindernis. Bei einer solchen Kollision wird das Werkzeug belastet und der Werkzeugträger aufgrund seiner beweglichen Lagerung bewegt, wodurch der Sensorkörper vom Werkzeugträger betätigt wird. Der Sensorkörper registriert die Belastung und die Maschine kann entsprechend gesteuert werden. Das Steuern kann hierbei das sofortige Anhalten und ggf. das Zurückfahren des Handhabungsgeräts umfassen oder das Handhabungsgerät kann in eine Ruheposition verfahren werden. Derartige Sensorkörper sind für den Einsatz mit Robotern bereits erprobt und können in jeder nur erdenklichen Form ausgebildet werden, um das Handhabungsgerät im Wesentlichen vollständig zu bedecken. Hierdurch wird mehr oder weniger die gesamte Fläche eines Roboters gesichert, sodass Kollisionen mit ernsten Folgen für Einrichtungen oder Personen im Umfeld eines Roboters vermieden werden können, ohne dass zur Sicherung eines vom Roboter geführten Werkzeugs eine gänzlich neue Technologie angewendet werden muss. Insbesondere kann die Steuerung der erfindungsgemäßen Vorrichtung in die Steuerung des Handhabungsgeräts mit einem solchen Formkörper integriert werden. Dadurch, dass der Sensorkörper mit einem ersten Bereich das Trägergehäuse umschließt und mit einem zweiten Bereich in den Spalt zwischen dem Trägergehäuse und dem Werkzeugträger eingreift, ist die ganze erfindungsgemäße Vorrichtung abgesichert, da sowohl eine Kollision des Werkzeugträgers oder eines darauf montierten Werkzeugs mit einem Hindernis als auch eine Kollision mit dem Trägergehäuse mit Hilfe des Sensorkörpers erkannt wird und zur Steuerung des Handhabungsgeräts entsprechend ausgewertet werden kann.

Die soeben genannten Sensorkörper werten den Druckanstieg in der gasgefüllten Kammer bei Berührung von außen aus. Bei Belastung des Werkzeugträgers im Falle einer Kollision mit einem Hindernis bewegt sich dieser relativ zum Trägergehäuse und der Spalt verringert sich, wodurch der Sensorkörper eingeklemmt wird, was zu einem starken und daher gut auswertbaren Druckanstieg in der Kammer führt.

In besonders günstiger Weise weist der Werkzeugträger eine Montageplatte für Werkzeug auf, die zusammen mit dem Trägergehäuse den Spalt bildet. Montageplatten dienen der modularen Bestückung von Robotern und ermöglichen einen raschen Werkzeugwechsel. Wenn nun die erfindungsgemäße Vorrichtung eine solche Platte bereitstellt, die gleichzeitig zusammen mit dem Trägergehäuse den Spalt bildet, wird die gewohnte Verwendung von Werkzeugen mit der erfindungsgemäßen Vorrichtung nicht verkompliziert, da das Werkzeug einfach an der Montageplatte montiert werden kann.

Dieser Gedanke wird besonders effizient weiterverfolgt, wenn das Trägergehäuse ein zu einer Montageplatte für ein Werkzeug passendes Montageelement umfasst, wie dies einer bevorzugten Ausführungsform der vorliegenden Erfindung entspricht. Dies bedeutet, dass die erfindungsgemäße Sicherheitsvorrichtung wie ein herkömmliches Werkzeug an das Handhabungsgerät angeschlossen werden kann.

Um die nötige Beweglichkeit des Werkzeugträgers gegenüber dem Trägergehäuse zu gewährleisten, ist die erfindungsgemäße Vorrichtung bevorzugt dahingehend weitergebildet, dass der Werkzeugträger aus dem Inneren des Trägergehäuses durch eine Öffnung in der Wand des Trägergehäuses nach außen ragt und federnd gegen die Innenseite der Wand des Trägergehäuses gedrückt ist.

Um eine ausreichende Beweglichkeit des Werkzeugträgers in der Öffnung zu gewährleisten, ist die Erfindung bevorzugt dahingehend weitergebildet, dass der Werkzeugträger an seinem durch eine Wand des Trägergehäuses nach außen ragenden Bereich einen sich nach außen verjüngenden Stiel umfasst, damit der Werkzeugträger beim Bewegen im Sinne eines Verkippens eine ausreichende Freistellung in der Öffnung hat.

Das erfindungsgemäße Handhabungsgerät zeichnet sich durch das Vorhandensein der erfindungsgemäßen Vorrichtung aus und ist bevorzugt dahingehend weitergebildet, dass das Handhabungsgerät an von der Vorrichtung zum Steuern des Handhabungsgeräts verschiedenen Bereichen einen Sensorkörper trägt. Gemäß dieser bevorzugten Ausführungsform der vorliegenden Erfindung kann das Handhabungsgerät, beispielsweise ein Roboter, vollständig oder zumindest teilweise gegen Kollisionen mit Einrichtungen oder Personen gesichert sein, sodass eine hohe Betriebssicherheit des Roboters erreicht wird.

Im Rahmen der vorliegenden Erfindung ist der Sensorkörper bevorzugt von einer gasgefüllten Kammer gebildet, die von einer flexiblen, durch Kollision mit einem Hindernis verformbaren Hülle umgeben ist und weiters einen Drucksensor zur Messung des Gasdrucks im Inneren der Kammer umfasst. Derartige Sensorkörper sind für den Einsatz mit Robotern bereits erprobt und können in jeder nur erdenklichen Form ausgebildet werden, um das Handhabungsgerät im Wesentlichen vollständig oder zumindest bereichsweise zu bedecken Hierdurch wird mehr oder weniger die gesamte von einer Kollision bedrohten Fläche eines Roboters gesichert, sodass Kollisionen mit ernsten Folgen für Einrichtungen oder Personen im Umfeld eines Roboters vermieden werden können, ohne dass zur Sicherung eines vom Roboter geführten Werkzeugs eine gänzlich neue Technologie angewendet werden muss. Insbesondere kann die Steuerung des erfindungsgemäßen Handhabungsgeräts analog der Steuerung des bekannten Handhabungsgeräts mit einem solchen Formkörper ausgeführt werden.

Die Erfindung wird nachfolgend anhand eines in der Zeichnung schematisch dargestellten Ausführungsbeispiels näher erläutert. In dieser zeigen:
Figur 1 eine schematische Explosionsdarstellung der erfindungsgemäßen Vorrichtung,
Figur 2 eine Schnittdarstellung der erfindungsgemäß Vorrichtung und die
Figuren 3 und 4 Schnittdarstellungen der erfindungsgemäßen Vorrichtung in unterschiedlichen Belastungssituationen.

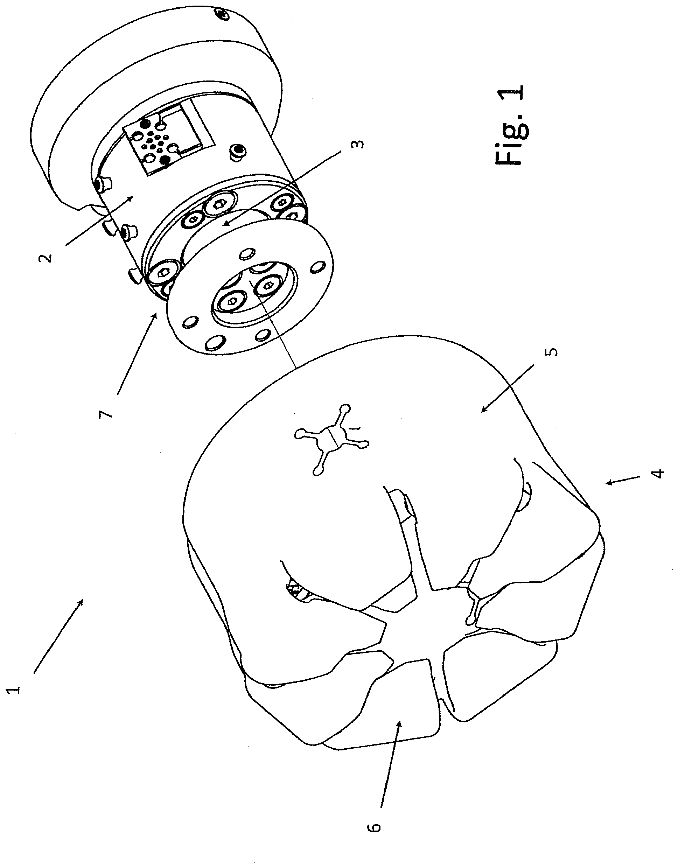

In Figur 1 ist die erfindungsgemäße Vorrichtung allgemein mit dem Bezugszeichen 1 bezeichnet. Sie besteht im Wesentlichen aus einem Trägergehäuse 2, einem Werkzeugträger 3 und einem Sensorkörper 4, der das Trägergehäuse mit einem ersten Bereich 5 im Wesentlichen vollständig umschließt. Der Sensorkörper 4 weist weiters einen zweiten Bereich 6 auf, der in den Spalt 7 zwischen dem Trägergehäuse 2 und dem Werkzeugträger 3 eingreift. Der Sensorkörper 4 ist von der in der WO 2016/000005 A1 genannten Art und ist von einer gasgefüllten Kammer gebildet, die von einer flexiblen, durch Kollision mit einem Hindernis verformbaren Hülle umgeben ist und weiters einen Drucksensor zur Messung des Gasdrucks im Inneren der Kammer umfasst, wobei der Drucksensor und eine Auswerteelektronik in Figur 1 nicht dargestellt sind. Eine Feder ist mit dem Bezugszeichen 18 bezeichnet.

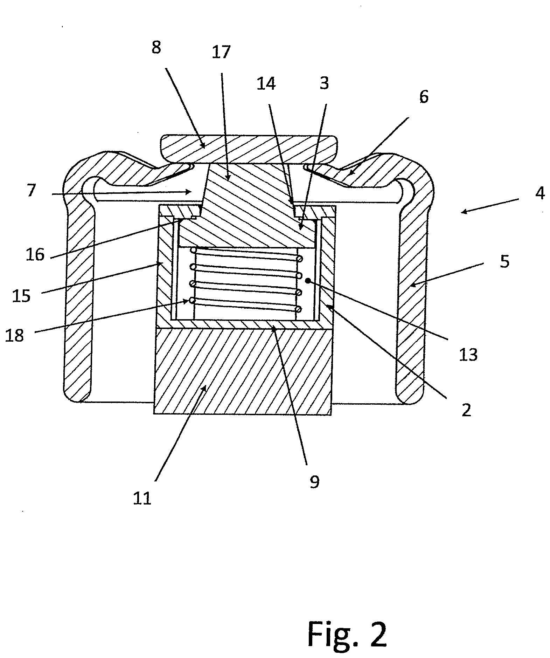

In Figur 2 ist deutlicher zu erkennen, wie der Sensorkörper 4 mit seinem zweiten Bereich 6 in den Spalt 7 zwischen dem Trägergehäuse 2 und dem Werkzeugträger 3 eingreift, wobei der Werkzeugträger 3 in den in den Figuren gezeigten Beispielen eine Montageplatte 8 für Werkzeug aufweist, die zusammen mit dem Trägergehäuse 2 den Spalt 7 bildet. Das Trägergehäuse 2 weist weiters ein zu einer Montageplatte 8 für ein Werkzeug passendes und in der Zeichnung nicht näher dargestelltes Montageelement 9 im Bereich seines Bodens auf. Mit 11 ist ein nicht näher spezifiziertes Anbauteil eines Handhabungsgeräts bezeichnet. In Figur 2 ist ferner zu erkennen, dass der Werkzeugträger 3 aus dem Inneren 13 des Trägergehäuses 2 durch eine Öffnung 14 in der Wand 15 des Trägergehäuses 2 nach außen ragt und federnd gegen die Innenseite 16 der Wand 15 des Trägergehäuses 2 gedrückt ist, wobei der Werkzeugträger 3 durch einen im Vergleich zu einem Stiel 17 abgesetzten Saum in der Öffnung 14 des Werkzeugträgers 2 gesichert ist. Der Stiel 17 des Werkzeugträgers 3 verjüngt sich von innen nach außen, um eine ausreichende Freistellung des Stiels 17 in der Öffnung 14 des Trägergehäuses 2 sicherzustellen, damit der Werkzeugträger 3 verkippen kann. Der Werkzeugträger 3 ist durch eine nicht dargestellte Feder so vorgespannt, dass er ohne Einwirken äußerer Kräfte starr in der Ruhelage verharrt. Überschreiten einwirkende Kräfte einen durch die Steifigkeit der Feder einstellbaren Grenzwert, kippt oder verschiebt sich der Werkzeugträger.

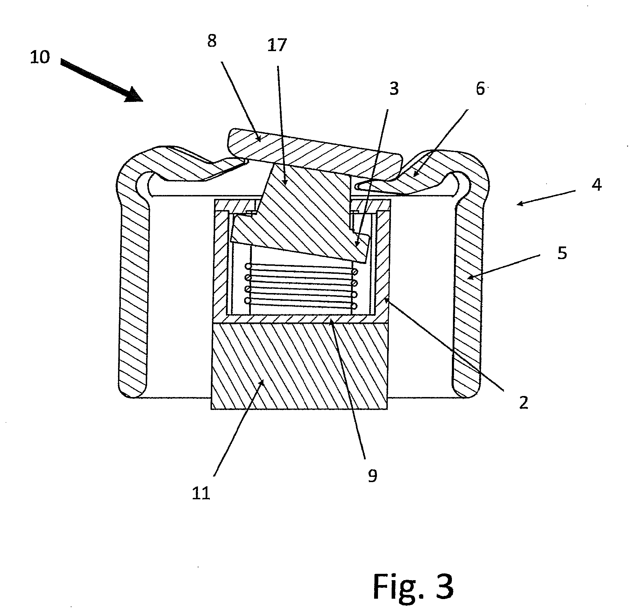

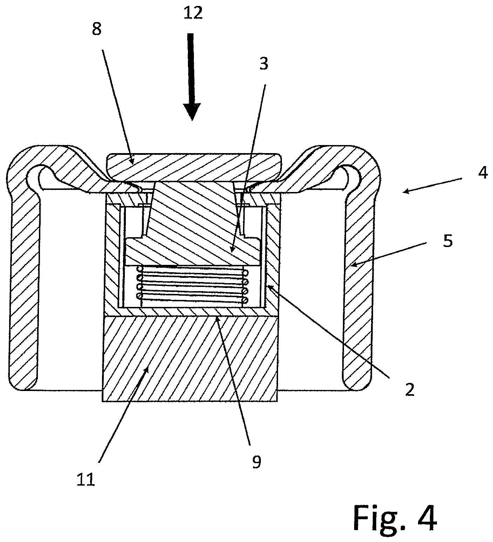

In Fig. 3 ist zu erkennen, dass bei einer radialen Belastung des Werkzeugträgers 3 in der Richtung des Pfeils 10 dieser von der federnd gelagerten Grundstellung gemäß Fig. 2 ausgelenkt wird, wodurch der Sensorkörper 4 im Bereich des Spaltes 7 eingeklemmt wird, was zu einer detektierbaren Druckveränderung im Sensorkörper 4 führt. Das entsprechende Signal kann in bekannter Weise zum Anhalten des Roboters bzw. des Handhabungsgeräts verwendet werden. Dasselbe gilt für die axiale Belastungssituation in Figur 4 gemäß dem Pfeil 12, bei dem der Sensorkörper 4 rundum im Spalt 7 eingeklemmt wird. Aus Gründen der Klarheit ist kein Werkzeug am Werkzeugträger 3 bzw. an dessen Montageplatte 8 montiert dargestellt, es ist jedoch offensichtlich, dass Belastungen durch Kollisionen im Sinne der Pfeil 10 oder 12 über das Werkzeug auf den Werkzeugträger 3 übertragen werden und eine entsprechende Auslenkung des Werkzeugträgers zur Folge haben, wodurch der Sensorkörper 4 vom Werkzeugträger 3 betätigt wird.

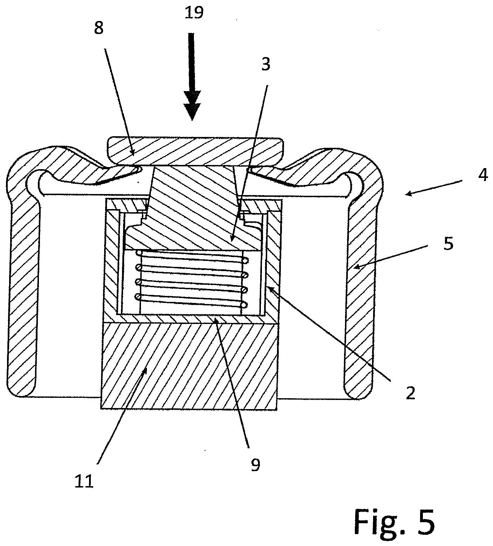

Fig. 5 verdeutlicht, dass auch bereits eine geringfügige Bewegung des Werkzeugträgers 3, bei der der Sensorkörper 4 nur leicht berührt wird, bereits zu einem detektierbaren Signal führt und somit zum Erkennen einer Kollision ausreicht.

Die erfindungsgemäße Vorrichtung stellt somit einen sicheren Flansch zur Verfügung, der zwischen Roboter und Werkzeug montiert wird. Bei Kollision des Werkzeugs mit einem Hindernis wirkt eine Kraft bzw. ein Moment auf den sicheren Flansch. Überschreiten Kraft oder Moment voreingestellte Grenzwerte, gibt der sichere Flansch nach und löst gleichzeitig einen Nothalt des Roboters aus.

Weiters führt eine direkte Kollision eines Hindernisses mit dem hüllenartigen Sensorkörper selbst zu einer Verformung, die ebenso detektiert wird und wiederum zu einem Stopp des Roboters führt. Der sichere Flansch detektiert somit über die als taktiler Sicherheitssensor ausgebildete Hülle sowohl eine Kollision des Werkzeugs als auch des Flansches selbst.

## Patentansprüche

1. Vorrichtung zum Steuern eines Handhabungsgeräts umfassend ein auf dem Handhabungsgerät anordenbares Trägergehäuse (2) mit einem außen auf dem Trägergehäuse (2) angeordneten taktilen Sensorkörper (4) sowie einen am Trägergehäuse (2) beweglich gelagerten Werkzeugträger (3), wobei der Sensorkörper (4) bei Belastung des Werkzeugträgers (3) vom Werkzeugträger (3) betätigbar ist, wobei der Sensorkörper (4) von einer gasgefüllten Kammer gebildet ist, die von einer flexiblen, durch Kollision mit einem Hindernis verformbaren Hülle umgeben ist und weiters einen Drucksensor zur Messung des Gasdrucks im Inneren der Kammer umfasst, **dadurch gekennzeichnet, dass** der Sensorkörper (4) mit einem ersten Bereich (5) das Trägergehäuse (2) umschließt und mit einem zweiten Bereich (6) in einen Spalt (7) zwischen dem Trägergehäuse (2) und dem Werkzeugträger (3) eingreift.

2. Vorrichtung nach Anspruch 1, **dadurch gekennzeichnet, dass** der Werkzeugträger (3) eine Montageplatte (8) für Werkzeug aufweist, die zusammen mit dem Trägergehäuse (2) den Spalt (7) bildet.

3. Vorrichtung nach einem der Ansprüche 1 oder 2, **dadurch gekennzeichnet, dass** das Trägergehäuse (2) ein zu einer Montageplatte für ein Werkzeug passendes Montageelement (9) umfasst.

4. Vorrichtung nach einem der Ansprüche 1 bis 3, **dadurch gekennzeichnet, dass** der Werkzeugträger (3) aus dem Inneren (13) des Trägergehäuses (2) durch eine Öffnung (14) in der Wand (15) des Trägergehäuses (2) nach außen ragt und federnd gegen die Innenseite (16) der Wand (15) des Trägergehäuses (2) gedrückt ist.

5. Vorrichtung nach einem der Ansprüche 1 bis 3, **dadurch gekennzeichnet, dass** der Werkzeugträger (3) an seinem durch eine Wand (15) des Trägergehäuses (2) nach außen ragenden Bereich einen sich nach außen verjüngenden Stiel (17) umfasst.

6. Handhabungsgerät mit einer Vorrichtung nach einem der Ansprüche 1 bis 5.

7. Handhabungsgerät nach Anspruch 6, **dadurch gekennzeichnet, dass** das Handhabungsgerät an von der Vorrichtung zum Steuern des Handhabungsgeräts verschiedenen Bereichen einen Sensorkörper (4) trägt.

## Claims

1. A device for controlling a handling device comprising a carrier housing (2) which is configured to be arranged on the handling device with a tactile sensor body (4) arranged on the outside of the carrier housing (2) and a tool carrier (3) movably mounted on the carrier housing (2), wherein the sensor body (4) is configured to be actuated by the tool carrier (3) when load is acting on the tool carrier (3), wherein the sensor body (4) is formed by a gas-filled chamber which is surrounded by a flexible shell, which is configured to be deformed by collision with an obstacle, and further comprises a pressure sensor configured for measuring a gas pressure prevailing inside the chamber, **characterized in that** the sensor body (4) encloses the carrier housing (2) with a first area (5) and with a second area (6) engages a gap (7) formed between the carrier housing (2) and the tool carrier (3).

2. The device according to claim 1, **characterized in that** the tool carrier (3) has a mounting plate (8) for a tool, which together with the carrier housing (2) forms the gap (7).

3. The device according to claim 1 or 2, **characterized in that** the carrier housing (2) comprises a mounting element (9) that matches the mounting plate for a tool.

4. The device according to any one of claims 1 to 3, **characterized in that** the tool carrier (3) protrudes to the outside from an interior (13) of the carrier housing (2) through an opening (14) in a wall (15) of the carrier housing (2) and is resiliently pressed against an inside face (16) of the wall (15) of the carrier housing (2).

5. The device according to any one of claims 1 to 3, **characterized in that** the tool carrier (3) comprises an outwardly tapering shaft (17) on an area protruding outward through the wall (15) of the carrier housing (2).

6. A handling device with a device according to any one of claims 1 to 5.

7. The handling device according to claim 6, **characterized in that** the handling device carries a sensor body (4) in areas different from the device for controlling the handling device.

## Revendications

1. Dispositif de commande d'un appareil de manipulation, comprenant un boîtier de support (2) pouvant être disposé sur l'appareil de manipulation, avec un corps de capteur (4) tactile disposé à l'extérieur sur le boîtier de support (2) ainsi qu'un porte-outil (3) qui est monté de manière mobile sur le boîtier de support (2), le corps de capteur (4) pouvant être actionné par le porte-outil (3) lorsque le porte-outil (3) est chargé, le corps de capteur (4) étant formé par une chambre remplie de gaz qui est entourée d'une coque souple qui est déformable par collision avec un obstacle, et qui comporte en outre un capteur de pression pour mesurer la pression de gaz à l'intérieur de la chambre, **caractérisé en ce que** le corps de capteur (4) entoure le boîtier de support (2) avec une première zone (5) et s'enfonce dans un interstice (7) entre le boîtier de support (2) et le porte-outil (3) avec une deuxième zone (6).

2. Dispositif selon la revendication 1, **caractérisé en ce que** le porte-outil (3) comporte une plaque de montage (8) pour outils qui, avec le boîtier de support (2), forme l'interstice (7).

3. Dispositif selon l'une des revendications 1 ou 2, **caractérisé en ce que** le boîtier de support (2) comprend un élément de montage (9) adapté à une plaque de montage pour un outil.

4. Dispositif selon l'une des revendications 1 à 3, **caractérisé en ce que** le porte-outil (3) dépasse vers l'extérieur depuis l'intérieur (13) du boîtier de support (2) à travers une ouverture (14) dans la paroi (15) du boîtier de support (2) et est pressé élastiquement contre l'intérieur (16) de la paroi (15) du boîtier de support (2).

5. Dispositif selon l'une des revendications 1 à 3, **caractérisé en ce que** le porte-outil (3) comprend une poignée (17) effilée vers l'extérieur sur sa zone dépassant vers l'extérieur à travers une paroi (15) du boîtier de support (2).

6. Appareil de manipulation avec un dispositif selon l'une des revendications 1 à 7.

7. Appareil de manipulation selon la revendication 6, **caractérisé en ce que** l'appareil de manipulation porte un corps de capteur (4) dans des zones différentes du dispositif de commande de l'appareil de manipulation.
